# EUROPÄISCHE PATENTSCHRIFT

(11) **EP 3 368 267 B1**
(45) Veröffentlichungstag und Bekanntmachung des Hinweises auf die Patenterteilung: **07.10.2020**
(21) Anmeldenummer: 16747794.2
(22) Anmeldetag: 05.08.2016
(51) Int. Cl.: B29C 45/76, B29C 45/17

(54) **KUNSTSTOFF-SPRITZGIESSMASCHINE MIT WENIGSTENS EINER KAMERA**
PLASTIC INJECTION-MOLDING MACHINE HAVING AT LEAST ONE CAMERA
PRESSE D'INJECTION DE MATIÈRE PLASTIQUE ÉQUIPÉE D'AU MOINS UNE CAMÉRA

(30) Priorität: 30.10.2015 DE 102015118571
(43) Veröffentlichungstag der Anmeldung: 05.09.2018
(73) Patentinhaber: KraussMaffei Technologies GmbH, 80997 München (DE)
(72) Erfinder: GRIMM, Günther, 86567 Hilgertshausen (DE)
(74) Vertreter: Wilhelm, Ludwig
(86) Internationale Anmeldenummer: PCT/EP2016/068808
(87) Internationale Veröffentlichungsnummer: WO 2017/071851

(56) Entgegenhaltungen:
- AT-U1- 12 459
- DE-A1-102008 008 606
- DE-A1-102013 012 914
- DE-U1-202005 013 954

## Beschreibung

Die Erfindung betrifft eine Kunststoff-Spritzgießmaschine, aufweisend eine Spritzeinheit zum Aufbereiten einer zu formenden Kunststoffmasse, eine Schließeinheit mit einem Spritzwerkzeug, das wenigstens eine Kavität aufweist, in welche die von der Spritzeinheit aufbereitete Kunststoffmasse eingespritzt wird, um ein Formteil herzustellen, sowie aufweisend eine Maschinensteuerung, die ausgebildet ist, die Spritzeinheit und die Schließeinheit anzusteuern und eine Benutzerschnittstellenvorrichtung, die wenigstens ein Eingabemittel aufweist und wenigstens ein Ausgabemittel aufweist, das als ein Bildschirm ausgebildet ist, und des Weiteren aufweisend wenigstens eine Kamera, die zur Überwachung einer Umgebung der Kunststoff-Spritzgießmaschine ausgebildet ist.

Aus der WO 2007/028721 A1 ist eine Spritzgießanlage bekannt, mit einer Spritzgießmaschine umfassend eine Einspritzeinheit und eine Schließeinheit mit Spritzgießwerkzeugen zur Herstellung von Formteilen sowie einen Bildschirm, und mit einem die Spritzgießmaschine selbst und gegebenenfalls Peripheriegeräte umfassenden Arbeitsraum, bei der eine oder mehrere Kameras zur Überwachung des Arbeitsraums vorgesehen sind, wobei die Bilder der verschiedenen Kameras selektiv nacheinander und/oder simultan auf dem Bildschirm darstellbar sind.

Die Firmenschrift Wittmann Battenfeld GmbH, TM 180-500 t Serie, 09/2013 zeigt eine Kunststoff-Spritzgießmaschine, die eine Web-Cam, d.h. eine Netzwerkkamera aufweist, um normalerweise nicht einsehbare Bereich, wie einer Roboterablage oder eines Werkzeugbereichs einsehen zu können.

Die DE 20 2005 013 954 U1 offenbart, dass zwei Kameras an einer Spritzgießanlage vorgesehen sein können und zwar in den oberen Ecken von Arbeitsräumen.

Die DE 10 2013 012 914 offenbart, dass Kameras eine Supervision ermöglichen können und zwar um bestimmte Aspekte des Betriebs eines Systems entfernt auf einem Display der Steuerungseinrichtung sehen zu können.

Die WO 2015/031989 A1 beschreibt eine Benutzerschnittstellenvorrichtung einer Kunststoff-Spritzgießmaschine, die als ein Smartphone ausgebildet sein kann.

Die AT 12 459 U1 beschreibt verschiedene Ausführungen von Bedienvorrichtungen.

Die DE 10 2008 606 A1 beschreibt eine Bedieneinheit für eine Spritzgussmaschine.

Aufgabe der Erfindung ist es, eine Kunststoff-Spritzgießmaschine zu schaffen, die für einen Maschinenbediener besonders übersichtlich ausgeführt ist.

Die Aufgabe wird gelöst durch eine Kunststoff-Spritzgießmaschine, aufweisend eine Spritzeinheit zum Aufbereiten einer zu formenden Kunststoffmasse, eine Schließeinheit mit einem Spritzwerkzeug, das wenigstens eine Kavität aufweist, in welche die von der Spritzeinheit aufbereitete Kunststoffmasse eingespritzt wird, um ein Formteil herzustellen, sowie aufweisend eine Maschinensteuerung, die ausgebildet ist, die Spritzeinheit und die Schließeinheit anzusteuern und eine Benutzerschnittstellenvorrichtung, die wenigstens ein Eingabemittel aufweist und wenigstens ein Ausgabemittel aufweist, das als ein Bildschirm ausgebildet ist, und des Weiteren aufweisend wenigstens eine Kamera, die zur Überwachung einer Umgebung der Kunststoff-Spritzgießmaschine ausgebildet ist, wobei die Benutzerschnittstellenvorrichtung ein Gehäuse aufweist, das eine Vorderseite und eine Rückseite umfasst, wobei an der Vorderseite der Bildschirm angeordnet ist, und die Maschinensteuerung eingerichtet ist, den von der Kamera erfassten Bereich auf dem Bildschirm anzuzeigen, und wobei die Kunststoff-Spritzgießmaschine eine Verstellvorrichtung aufweist, welche die Benutzerschnittstellenvorrichtung trägt und welche ausgebildet ist, die Benutzerschnittstellenvorrichtung in unterschiedlichen Positionen und/oder Lagen im Raum zu halten, wobei die Kamera ausgebildet ist, einen hinter der Benutzerschnittstellenvorrichtung liegenden Bereich der Kunststoff-Spritzgießmaschine zu erfassen und derart an der Rückseite des Gehäuses der Benutzerschnittstellenvorrichtung angeordnet und befestigt ist, dass auch die Kamera bei einem Verstellen der Verstellvorrichtung die der Benutzerschnittstellenvorrichtung entsprechende Position und/oder Lage im Raum einnimmt.

Eine Kunststoff-Spritzgießmaschine umfasst im Allgemeinen zumindest eine Spritzeinheit zum Aufbereiten einer zu formenden Kunststoffmasse, eine am vorderen Ende der Spritzeinheit angeordnete Spritzdüse, die an ein Spritzwerkzeug ankoppelbar ist, das Spritzwerkzeug und eine Schließeinheit, welche üblicher Weise auf einem Maschinengestell der Kunststoff-Spritzgießmaschine angeordnet ist und eine feststehende Formaufspannplatte und eine bewegliche Formaufspannplatte aufweist. Das Spritzwerkzeug umfasst wenigstens zwei Formhälften, von denen die eine Formhälfte auf der feststehenden Formaufspannplatte befestigt ist und die andere Formhälfte auf der bewegliche Formaufspannplatte befestigt ist, derart, dass bei einem Öffnen der Schließeinheit, d.h. bei einem Auseinanderfahren von feststehender Formaufspannplatte und beweglicher Formaufspannplatte die mindestens eine Kavität des Spritzwerkzeugs freigegeben wird. Die Spritzeinheit kann einen oder mehrere Extruder aufweisen, die jeweils ausgebildet sind, wenigstens ein Kunststoffvorprodukt, wie beispielsweise ein Kunststoff-Granulat zu schmelzen, zu vermischen und zu homogenisieren, ggf. zu entgasen. Jeder Extruder kann für die Zuführung von bspw. eines Kunststoff-Granulats außerdem einen Aufgabetrichter aufweisen.

Die Kunststoff-Spritzgießmaschine weist mehrere Maschinenteile auf. Gewisse Maschinenteile können beweglich gelagert sein und mittels eines Motors oder Antriebs, insbesondere hydraulischen oder elektrischen Motors bzw. hydraulischen oder elektrischen Antriebs automatisch oder in einem Handfahrbetrieb manuell gesteuert bewegt werden. So stellt ein beispielhaftes Maschinenteil die Schließeinheit dar, welche angesteuert von der Maschinensteuerung der Kunststoff-Spritzgießmaschine, gemäß eines in der Maschinensteuerung ablaufenden Maschinenprogramms, automatisch oder in einem Handfahrbetrieb bspw. mittels der Benutzerschnittstellenvorrichtung manuell gesteuert, geöffnet oder geschlossen werden kann. Ein anderes beispielhaftes Maschinenteil stellt die Spritzeinheit dar, welche angesteuert von der Maschinensteuerung der Kunststoff-Spritzgießmaschine, gemäß eines in der Maschinensteuerung ablaufenden Maschinenprogramms, automatisch oder in einem Handfahrbetrieb bspw. mittels der Benutzerschnittstellenvorrichtung manuell gesteuert, betrieben werden kann, beispielsweise durch Ansteuern oder Regeln der Drehzahl einer Förderschnecke der Spritzeinheit oder durch Ansteuern oder Regeln wenigstens einer Heizvorrichtung der Spritzeinheit.

Die Benutzerschnittstellenvorrichtung weist wenigstens ein Eingabemittel und wenigstens ein Ausgabemittel auf. Mindestens ein Ausgabemittel ist als ein Bildschirm ausgebildet. Die Benutzerschnittstellenvorrichtung kann, abgesehen von einer geringen Anzahl von sicherheitsrelevanten elektro-mechanischen Eingabemitteln, wie bspw. eines Notaus-Schalters, im Wesentlichen allein von einem einzigen Bildschirm gebildet werden. Der Bildschirm kann als ein Touch-Bildschirm ausgebildet sein und insoweit sowohl Ausgabemittel, als auch Eingabemittel aufweisen. Die Benutzerschnittstellenvorrichtung kann ein Gehäuse aufweisen, das eine Vorderseite und eine Rückseite umfasst, wobei an der Vorderseite der Bildschirm angeordnet ist. Das Gehäuse bzw. zumindest dessen Rückseite ist optisch undurchlässig ausgebildet, das bedeutet, dass zumindest die Rückseite des Gehäuses nicht durchscheinen ausgeführt ist. Üblicher Weise ist das Gehäuse der Benutzerschnittstellenvorrichtung aus Metall oder Kunststoff hergestellt.

Die Kunststoff-Spritzgießmaschine weist außerdem mindestens eine Kamera auf. Die mindestens eine Kamera ist zur Überwachung einer Umgebung der Kunststoff-Spritzgießmaschine ausgebildet. Unter einer Überwachung einer Umgebung der Kunststoff-Spritzgießmaschine kann verstanden werden, dass die mindestens eine Kamera die Kunststoff-Spritzgießmaschine von außen zumindest teilweise oder vollständig bildlich erfassen kann. Es kann auch vorgesehen sein, dass die mindestens eine Kamera Räume innerhalb der Kunststoff-Spritzgießmaschine bildlich erfassen kann. So kann vorgesehen sein, dass die mindestens eine Kamera den Bereich der Schließeinheit und/oder den Raum zwischen zwei geöffneten Werkzeughälften bildlich erfassen kann. Die mindestens eine Kamera kann bspw. aber auch den Bereich der Spritzeinheit bildlich erfassen.

Indem die Kamera ausgebildet ist, einen hinter der Benutzerschnittstellenvorrichtung liegenden Bereich der Kunststoff-Spritzgießmaschine zu erfassen und die Maschinensteuerung eingerichtet ist, den von der Kamera erfassten Bereich auf dem Bildschirm anzuzeigen, wird eine Kunststoff-Spritzgießmaschine geschaffen, die für einen Maschinenbediener besonders übersichtlich ausgeführt ist, da so Bereiche der Kunststoff-Spritzgießmaschine von einem Maschinenbediener eingesehen werden können, die ansonsten von der Benutzerschnittstellenvorrichtung optisch verdeckt sein würden. Es erübrigt sich dann für einen Maschinenbediener die Benutzerschnittstellenvorrichtung aus einer Sichtlinie manuell mechanisch herausbewegen zu müssen, um den ursprünglich hinter der Benutzerschnittstellenvorrichtung liegenden Bereich der Kunststoff-Spritzgießmaschine freizugeben und dann einsehen zu können.

Diesem Umstand kommt eine zunehmende Bedeutung zu, da die Benutzerschnittstellenvorrichtung entwicklungstechnisch stetig größer werden, d.h. die Fläche des Bildschirms der Benutzerschnittstellenvorrichtung immer größer wird. Dies führt einerseits dazu, dass ein immer größer werdender Bereich der Kunststoff-Spritzgießmaschine von den immer größeren Benutzerschnittstellenvorrichtungen für einen Maschinenbediener optisch verdeckt wird. Andererseits nimmt aufgrund der zunehmenden Größe der Bildschirme auch das Gewicht der gesamten Benutzerschnittstellenvorrichtung zu, so dass es mit zunehmendem Kraftaufwand verbunden ist, die Benutzerschnittstellenvorrichtung manuell aus einem gewünschten Blickfeld herauszubewegen.

Indem die Kamera ausgebildet ist, einen hinter der Benutzerschnittstellenvorrichtung liegenden Bereich der Kunststoff-Spritzgießmaschine zu erfassen und die Maschinensteuerung eingerichtet ist, den von der Kamera erfassten Bereich auf dem Bildschirm anzuzeigen, kann ein Maschinenbediener den für ihn optisch hinter der Benutzerschnittstellenvorrichtung liegenden Bereich der Kunststoff-Spritzgießmaschine auf dem Bildschirm ansehen.

Die Benutzerschnittstellenvorrichtung weist ein Gehäuse auf, das eine Vorderseite und eine Rückseite umfasst, wobei an der Vorderseite der Bildschirm angeordnet ist und an der Rückseite die Kamera angeordnet ist.

Die Vorderseite des Gehäuses kann von einer geschlossenflächigen Vorderwand des Gehäuses gebildet werden, wobei der Bildschirm auf die geschlossenflächige Vorderwand aufgesetzt sein kann. Alternativ kann die Vorderseite des Gehäuses lediglich durch einen den Bildschirm umgebenden und/oder einfassenden Rahmen gebildet werden. Die Rückseite des Gehäuses kann von einer geschlossenflächigen Rückwand des Gehäuses gebildet werden. Die geschlossenflächige Rückwand des Gehäuses kann insoweit die Rückseite des Bildschirms überdecken. Die an der Rückseite angeordnete Kamera kann demgemäß in einer ersten Ausführungsform außen an der geschlossenflächigen Rückwand des Gehäuses angeordnet sein. In einer zweiten Ausführungsform kann die im Übrigen geschlossenflächige Rückwand einen Ausschnitt, wie bspw. ein Fenster oder ein Loch aufweisen, und die Kamera zumindest teilweise oder vollständig im Inneren des Gehäuses angeordnet sein, wobei über den Ausschnitt, das Fenster oder das Loch der Rückwand der optische Strahlengang der Kamera führt.

Indem die Kamera unmittelbar an der Rückseite des Gehäuses der Benutzerschnittstellenvorrichtung angeordnet ist, wird immer genau derjenige Bereich der Umgebung von der Kamera optisch erfasst, der genau hinter der Benutzerschnittstellenvorrichtung liegt. Somit können aufwändige Bewegungsvorrichtungen entfallen, die ansonsten bspw. zum Schwenken anderswo angeordneter Kameras erforderlich wären, um den jeweils richtigen Bereich der Umgebung von der Kamera optisch erfassen zu können. Je nach Aufenthaltsort des Maschinenbedieners und seiner Position bzw. je nach seiner Blickrichtung relativ zur Benutzerschnittstellenvorrichtung kann nämlich ein anderer Bereich der Kunststoff-Spritzgießmaschine durch die Benutzerschnittstellenvorrichtung verdeckt sein. Ist die Kamera unmittelbar an der Rückseite des Gehäuses der Benutzerschnittstellenvorrichtung angeordnet, wird die Kamera sozusagen automatisch in gleicher Weise verstellt und/oder verschwenkt, wie die Benutzerschnittstellenvorrichtung selbst verstellt und/oder verschwenkt wird. In diesem Fall verstellt sich die Kamera synchron in gleichem Maße, wie die Benutzerschnittstellenvorrichtung selbst. Die Benutzerschnittstellenvorrichtung kann insoweit mittels einer Verstellvorrichtung in verschiedenen Positionen und/oder Lagen im Raum festgehalten werden. Die Verstellvorrichtung kann zum manuellen Verstellen ausgebildet sein. Alternativ kann die Verstellvorrichtung zum automatischen, d.h. gesteuert angetriebenen Verstellen ausgebildet sein.

Die Kunststoff-Spritzgießmaschine kann demgemäß eine Verstellvorrichtung aufweisen, welche die Benutzerschnittstellenvorrichtung trägt und welche ausgebildet ist, die Benutzerschnittstellenvorrichtung in unterschiedlichen Positionen und/oder Lagen im Raum zu halten, wobei die Kamera derart an der Rückseite des Gehäuses der Benutzerschnittstellenvorrichtung befestigt ist, dass auch die Kamera bei einem Verstellen der Verstellvorrichtung die der Benutzerschnittstellenvorrichtung entsprechende Position und/oder Lage im Raum einnimmt.

Die Kamera kann an der Rückseite des Gehäuses bzw. bezüglich der Rückseite des Gehäuses der Benutzerschnittstellenvorrichtung starr befestigt sein.

Alternativ oder ergänzend zu der ersten Ausführungsvariante kann in einer anderen bzw. aufbauenden Ausführungsvariante die Kamera oder wenigstens eine ergänzende Kamera an einer von der Benutzerschnittstellenvorrichtung getrennten Stelle der Kunststoff-Spritzgießmaschine angeordnet sein, insbesondere können demgemäß mehrere Kameras an verschiedenen von der Benutzerschnittstellenvorrichtung getrennten Stellen der Kunststoff-Spritzgießmaschine angeordnet sein, und die wenigstens eine Kamera kann dann mit einer Auswertevorrichtung verbunden sein, die ausgebildet ist, von der Kamera aufgenommene Bildinformationen zu speichern, die momentane Position und Lage der Benutzerschnittstellenvorrichtung zu erfassen, und die gespeicherten Bildinformationen in Abhängigkeit der erfassten momentanen Position und Lage der Benutzerschnittstellenvorrichtung zu verändern und auf dem Bildschirm anzeigen zu lassen, derart, dass in jeder Position und/oder Lage der Benutzerschnittstellenvorrichtung derjenige Bereich der Kunststoff-Spritzgießmaschine auf dem Bildschirm angezeigt wird, der hinter der Benutzerschnittstellenvorrichtung liegt, d.h. der in Blickrichtung eines Betrachters bzw. des Maschinenbedieners auf den Bildschirm, hinter der Benutzerschnittstellenvorrichtung liegt.

Indem die wenigstens eine Kamera an einer von der Benutzerschnittstellenvorrichtung getrennten Stelle der Kunststoff-Spritzgießmaschine angeordnet ist, können beispielsweise bereits zu anderen Zwecken an der Kunststoff-Spritzgießmaschine vorhandene Kameras zu dem erfindungsgemäßen Zweck benutzt werden, ohne dass es erforderlich wäre, eine speziell für den erfindungsgemäßen Zweck ausgebildete Kamera an der Benutzerschnittstellenvorrichtung vorzusehen.

In einer beispielhaften Variante kann vorgesehen sein, dass die Kamera zwar hinter der Benutzerschnittstellenvorrichtung angeordnet ist, aber nicht im Gehäuse der Benutzerschnittstellenvorrichtung direkt verbaut ist. So kann die Kunststoff-Spritzgießmaschine beispielsweise komplett mit einer Verkleidung, wie einer den Arbeitsraum der Kunststoff-Spritzgießmaschine in einer Schließstellung einschließenden und in einer Öffnungsstellung freigebenden Einhausung oder einer Schutztüre, insbesondere ohne Sichtscheiben versehen sein. An einer Außenwand einer solchen Verkleidung, insbesondere Blechverkleidung bzw. Einhausung oder Schutztüre, kann die Benutzerschnittstellenvorrichtung fest oder verstellbar montiert sein. Eine Kamera ist in dieser Variante nicht direkt hinter dem Gehäuse der Benutzerschnittstellenvorrichtung montiert, sondern ist nur mittelbar hinter der Benutzerschnittstellenvorrichtung angeordnet und zwar innerhalb der Verkleidung bzw. Einhausung oder Schutztüre angeordnet. Über eine mit der Benutzerschnittstellenvorrichtung gekoppelte Verstellmechanik oder über eine elektro-motorische Verstellvorrichtung kann dabei die Kamera die gleichen Bewegungen mitmachen, wie die Benutzerschnittstellenvorrichtung, z.B. bei einem seitlichen Verschieben der Verkleidung bzw. der Einhausung oder der Schutztüre, so dass der optische Eindruck entsteht, ein Maschinenbediener hätte mittels der Benutzerschnittstellenvorrichtung eine Art von Röntgenvorrichtung, mit der er durch die Verkleidung bzw. Einhausung oder Schutztüre sehen könnte und zwar genau denjenigen Ausschnitt, welcher durch die Benutzerschnittstellenvorrichtung optisch tatsächlich verdeckt ist.

Indem die wenigstens eine Kamera an einer von der Benutzerschnittstellenvorrichtung getrennten Stelle der Kunststoff-Spritzgießmaschine angeordnet ist, können auch verbesserte optische Darstellungen auf dem Bildschirm erzeugt werden, beispielsweise dadurch, dass die auf Grundlage der von der Kamera aufgenommenen Bildinformationen auf dem Bildschirm verändert dargestellten Bildinformationen nicht nur von der Position und Lage der Benutzerschnittstellenvorrichtung selbst abhängig verändert dargestellt werden, sondern auch in Abhängigkeit des Aufenthaltsortes des Maschinenbedieners und seiner Position bzw. je nach seiner Blickrichtung relativ zur Benutzerschnittstellenvorrichtung verändert dargestellt werden. So kann beispielsweise bei der Darstellung auf dem Bildschirm berücksichtigt sein, dass der Maschinenbediener nicht senkrecht auf den Bildschirm blickt, sondern in einem spitzen Winkel von der Seite auf den Bildschirm blickt und demgemäß dann auf dem Bildschirm nicht genau der senkrecht hinter der Benutzerschnittstellenvorrichtung liegende Bereich der Kunststoff-Spritzgießmaschine dargestellt wird, sondern ein etwas anderer Bereich. Hierzu kann ggf. auch die Position bzw. die Blickrichtung des Maschinenbedieners automatisch, bspw. durch allgemein bekannte Sensoren oder Trackingvorrichtungen erfasst und von der Maschinensteuerung ausgewertet und beim Anzeigen der Darstellung auf dem Bildschirm demgemäß berücksichtigt werden.

Die Auswertvorrichtung ist somit Teil der Kunststoff-Spritzgießmaschine bzw. die Auswertvorrichtung kann ein Teil der Maschinensteuerung sein, alternativ kann die Auswertvorrichtung eine von der Maschinensteuerung separate Auswertvorrichtung sein, die mit der Maschinensteuerung in kommunikativer Verbindung steht. Die Auswertvorrichtung kann hinsichtlich der Einzelaspekte des Speicherns der von der Kamera erfassten Bildinformationen, des Erfassens der momentanen Position und Lage der Benutzerschnittstellenvorrichtung und des prinzipiellen Veränderns und Darstellens von Bildinformationen in einer dem Fachmann an sich bekannten Weise ausgebildet sein und insbesondere aus dem technischen Gebiet der erweiterten Realität (Augmented Reality) bekannte Verfahren und/oder bekannte Vorrichtungen, wie bspw. allgemein bekannte Trackingsystem umfassen. Erfindungsgemäß ist jedoch vorgesehen, dass die Auswertvorrichtung zusätzlich derart ausgebildet ist, dass in jeder Position und/oder Lage der Benutzerschnittstellenvorrichtung derjenige Bereich der Umgebung der Kunststoff-Spritzgießmaschine auf dem Bildschirm angezeigt wird, der hinter der Benutzerschnittstellenvorrichtung liegt, d.h. der in Blickrichtung eines Betrachters bzw. des Maschinenbedieners auf den Bildschirm, hinter der Benutzerschnittstellenvorrichtung liegt.

Die Benutzerschnittstellenvorrichtung kann mit der Maschinensteuerung verbunden sein und das wenigstens eine Eingabemittel der Benutzerschnittstellenvorrichtung kann dabei eingerichtet sein, bei seiner manuellen Betätigung eine auf dem Bildschirm angezeigte Bedienoberfläche der Maschinensteuerung auszublenden und den hinter der Benutzerschnittstellenvorrichtung liegenden Bereich der Umgebung der Kunststoff-Spritzgießmaschine auf dem Bildschirm einzublenden. Indem das Eingabemittel eingerichtet ist, bei seiner manuellen Betätigung eine auf dem Bildschirm angezeigte Bedienoberfläche der Maschinensteuerung auszublenden und den hinter der Benutzerschnittstellenvorrichtung liegenden Bereich der Umgebung der Kunststoff-Spritzgießmaschine auf dem Bildschirm einzublenden, muss ein Maschinenbediener die Benutzerschnittstellenvorrichtung bspw. nicht mehr manuell zur Seite schwenken, um einen dahinter liegenden Bereich der Kunststoff-Spritzgießmaschine einsehen zu können, sondern er kann seine Position beibehalten und die Benutzerschnittstellenvorrichtung in ihrer bisherigen Position und/oder Lage belassen und trotzdem, sozusagen auf Knopfdruck, den hinter der Benutzerschnittstellenvorrichtung optisch verdeckt liegenden Bereich einsehen und zwar als Darstellung auf dem Bildschirm. Bei einer erneuten manuellen Betätigung des Eingabemittels kann vorgesehen sein, dass der dargestellte, hinter der Benutzerschnittstellenvorrichtung liegende Bereich der Umgebung der Kunststoff-Spritzgießmaschine wieder aus dem Bildschirm ausgeblendet wird und die eigentliche Bedienoberfläche der Maschinensteuerung wieder auf dem Bildschirm angezeigt wird.

Die Benutzerschnittstellenvorrichtung kann mit der Maschinensteuerung verbunden sein und das wenigstens eine Eingabemittel der Benutzerschnittstellenvorrichtung kann dabei eingerichtet sein, bei seiner manuellen Betätigung eine auf dem Bildschirm angezeigte Bedienoberfläche der Maschinensteuerung und den hinter der Benutzerschnittstellenvorrichtung liegenden Bereich der Umgebung der Kunststoff-Spritzgießmaschine auf dem Bildschirm in einer überlagerten Darstellung simultan anzuzeigen. Eine simultane überlagerte Darstellung ist beispielsweise dann gegeben, wenn die angezeigte Bedienoberfläche der Maschinensteuerung leicht transparent, halb-transparent bzw. im Kontrast reduziert angezeigt wird und gleichzeitig auch die Darstellung des hinter der Benutzerschnittstellenvorrichtung liegenden Bereich der Umgebung der Kunststoff-Spritzgießmaschine auf dem Bildschirm zu sehen ist. In einer solchen leicht transparenten bzw. halb-transparenten überlagerten Darstellung kann vorgesehen sein, dass evtl. vorhandene sonstige Eingabemittel der Bedienoberfläche deaktiviert sind, d.h. ein Betätigen bspw. der leicht transparenten bzw. halb-transparenten Touch-Eingabemittel zu keiner entsprechenden Reaktion durch die Maschinensteuerung führt. Alternativ kann in einer solchen leicht transparenten bzw. halb-transparenten überlagerten Darstellung vorgesehen sein, dass evtl. vorhandene sonstige Eingabemittel der Bedienoberfläche weiterhin aktiviert bleiben, d.h. ein Betätigen bspw. der leicht transparenten bzw. halb-transparenten Touch-Eingabemittel zu einer entsprechenden Reaktion durch die Maschinensteuerung führt.

In allen entsprechenden Ausführungen kann das Eingabemittel bzw. jegliches Eingabemittel der Benutzerschnittstellenvorrichtung ein Touch-Eingabemittel des Bildschirms sein oder der Bildschirm kann eine zur Erkennung von Gesten eingerichtete Touch-Oberfläche aufweisen.

Die Benutzerschnittstellenvorrichtung kann wenigstens ein Touch-Eingabemittel aufweisen, das hinsichtlich seiner Position und/oder Lage derart auf dem Bildschirm eingerichtet ist, dass es einer mittels der Kamera erfassten und auf dem Bildschirm angezeigten Darstellung eines Maschinenteils der Kunststoff-Spritzgießmaschine überlagert ist.

Die Maschinensteuerung kann darüber hinaus ausgebildet sein, aufgrund einer manuellen Betätigung des Touch-Eingabemittels dasjenige Maschinenteil der Kunststoff-Spritzgießmaschine in einer vorbestimmten Weise anzusteuern, das von dem Touch-Eingabemittel überlagert ist.

So kann beispielsweise vorgesehen sein, dass einer auf dem Bildschirm eingeblendeten beweglichen Aufspannplatte der Schließeinheit ein entsprechendes Touch-Eingabemittel virtuell überblendet ist, welches Eingabemittel bspw. die Kontur der eingeblendeten beweglichen Aufspannplatte aufweist, wobei bei einem manuellen Berühren des Bildschirmbereiches, welcher von der Kontur der eingeblendeten beweglichen Aufspannplatte umfangen wird, die Maschinensteuerung angewiesen wird, die beweglichen Aufspannplatte entsprechend zu öffnen oder zu schließen.

Verschiedene exemplarische Ausführungsbeispiele der Erfindung sind in der nachfolgenden Figurenbeschreibung unter Bezugnahme auf die beigefügten schematischen Figuren näher erläutert. Konkrete Merkmale dieser Ausführungsbeispiele können unabhängig davon, in welchem konkreten Zusammenhang sie erwähnt sind, gegebenenfalls auch einzeln oder in anderen Kombinationen betrachtet, allgemeine Merkmale der Erfindung darstellen.

Es zeigen:
- Fig. 1: eine schematische Darstellung einer beispielhaften ersten Ausführungsvariante einer Kunststoff-Spritzgießmaschine mit einer Benutzerschnittstellenvorrichtung,
- Fig. 2: eine schematische Darstellung einer beispielhaften Ausführungsvariante einer erfindungsgemäßen Benutzerschnittstellenvorrichtung mit einer Kamera in einer Vorderansicht und einer Rückansicht, und
- Fig. 3: eine schematische Darstellung einer beispielhaften zweiten Ausführungsvariante einer Kunststoff-Spritzgießmaschine mit einer verstellbaren Benutzerschnittstellenvorrichtung.

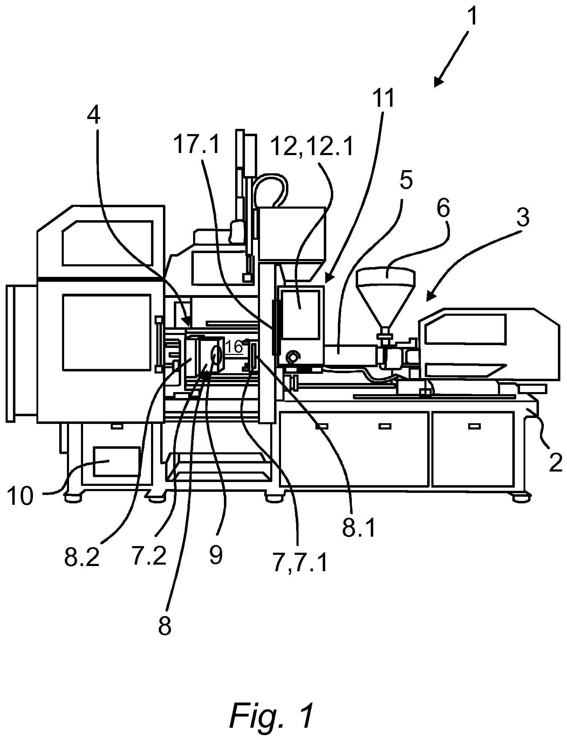

Die in Fig. 1 gezeigte, beispielhafte Kunststoff-Spritzgießmaschine 1 weist ein Maschinengestell 2 auf, auf dem eine Spritzeinheit 3 und eine Schließeinheit 4 angeordnet sind.

Die Spritzeinheit 3 dient zum Aufbereiten einer zu formenden Kunststoffmasse. Die Spritzeinheit 3 weist im Falle des vorliegenden Ausführungsbeispiels einen Extruder 5 auf. Der Extruder 5 ist ausgebildet, wenigstens ein Kunststoffvorprodukt, wie beispielsweise ein Kunststoff-Granulat zu schmelzen, zu vermischen und zu homogenisieren, ggf. zu entgasen. Der Extruder 5 weist dazu, bzw. für die Zuführung von bspw. des Kunststoff-Granulats einen Aufgabetrichter 6 auf.

An einem vorderen Ende der Spritzeinheit 3 bzw. an einem vorderen Ende des Extruders 5 ist eine nicht näher dargestellte Spritzdüse angeordnet, die an ein Spritzwerkzeug 7 angekoppelt ist. Das Spritzwerkzeug 7 ist in einer Schließeinheit 8 der Kunststoff-Spritzgießmaschine 1 angeordnet, welche üblicher Weise auf dem Maschinengestell 2 der Kunststoff-Spritzgießmaschinel angeordnet ist und eine feststehende Formaufspannplatte 8.1 und eine bewegliche Formaufspannplatte 8.2 aufweist. Das Spritzwerkzeug 7 umfasst wenigstens zwei Formhälften 7.1 und 7.2, von denen die eine Formhälfte 7.1 auf der feststehenden Formaufspannplatte 8.1 befestigt ist und die andere Formhälfte 7.2 auf der bewegliche Formaufspannplatte 8.2 befestigt ist, derart, dass bei einem Öffnen der Schließeinheit 8, d.h. bei einem Auseinanderfahren von feststehender Formaufspannplatte 8.1 und beweglicher Formaufspannplatte 8.2 mindestens eine Kavität 9 des Spritzwerkzeugs 7 freigegeben wird.

Die Kunststoff-Spritzgießmaschine 1 weist demgemäß mehrere Maschinenteile auf. Gewisse Maschinenteile können beweglich gelagert sein und mittels eines Motors oder Antriebs, insbesondere hydraulischen oder elektrischen Motors bzw. hydraulischen oder elektrischen Antriebs automatisch oder in einem Handfahrbetrieb manuell gesteuert bewegt werden. So stellt ein beispielhaftes Maschinenteil die Schließeinheit 4 dar, welche angesteuert von einer Maschinensteuerung 10 der Kunststoff-Spritzgießmaschine 1, gemäß eines in der Maschinensteuerung 10 ablaufenden Maschinenprogramms, automatisch oder in einem Handfahrbetrieb bspw. mittels einer Benutzerschnittstellenvorrichtung 11 der Kunststoff-Spritzgießmaschine 1 manuell gesteuert, geöffnet oder geschlossen werden kann. Ein anderes beispielhaftes Maschinenteil stellt die Spritzeinheit 3 dar, welche angesteuert von der Maschinensteuerung 10 der Kunststoff-Spritzgießmaschine 1, gemäß eines in der Maschinensteuerung 10 ablaufenden Maschinenprogramms, automatisch oder in einem Handfahrbetrieb bspw. mittels der Benutzerschnittstellenvorrichtung 11 manuell gesteuert, betrieben werden kann, beispielsweise durch Ansteuern oder Regeln der Drehzahl des Extruders 5 oder durch Ansteuern oder Regeln wenigstens einer nicht näher dargestellten Heizvorrichtung der Spritzeinheit 3.

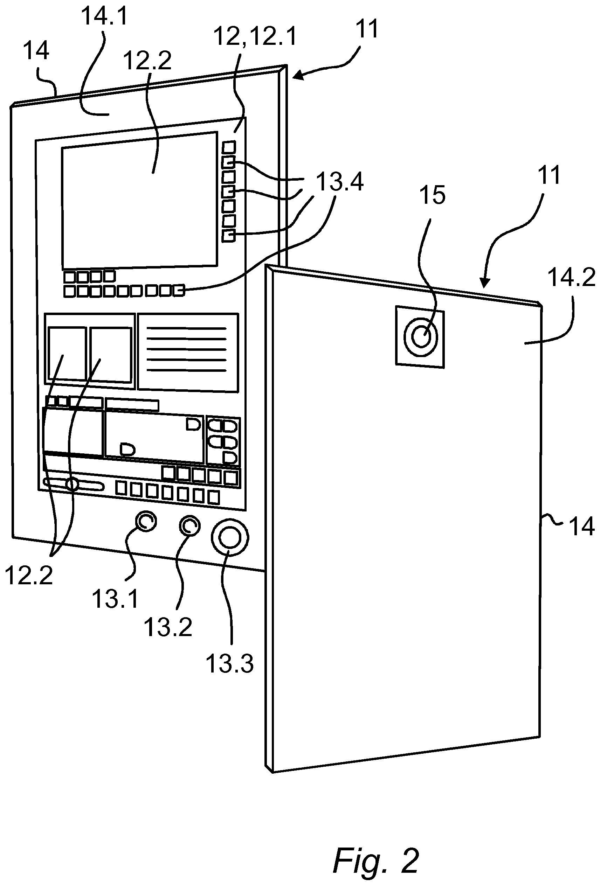

Die Fig. 2 zeigt eine beispielhafte Ausführungsform einer Benutzerschnittstellenvorrichtung 11 und zwar links dargestellt in einer Vorderansicht und rechts dargestellt in einer Rückansicht. Wie insbesondere in Fig. 2 dargestellt ist, weist die Benutzerschnittstellenvorrichtung 11 im Falle des vorliegenden Ausführungsbeispiels mehrere Eingabemittel 13.1, 13.2, 13.3 und ein Ausgabemittel 12 in Form eines Bildschirms 12.1 auf. Der Bildschirm 12.1 ist im Falle des vorliegenden Ausführungsbeispiels als ein Touch-Bildschirm ausgebildet. Die Benutzerschnittstellenvorrichtung 11 kann, abgesehen von einer geringen Anzahl von sicherheitsrelevanten elektro-mechanischen Eingabemitteln, wie bspw. des dritten Eingabemittels 13.3 in Form eines Notaus-Schalters, im Wesentlichen allein von einem einzigen Bildschirm 12.1 gebildet werden. Der Bildschirm 12.1 kann in der Ausführungsform als ein Touch-Bildschirm insoweit sowohl Bildschirm-Ausgabemittel 12.2, als auch Bildschirm-Eingabemittel 13.4 aufweisen. Die Benutzerschnittstellenvorrichtung 11 weist ein Gehäuse 14 auf, das eine Vorderseite 14.1 und eine Rückseite 14.2 umfasst, wobei an der Vorderseite 14.1 der Bildschirm 12.1 angeordnet ist. Das Gehäuse 14 bzw. zumindest dessen Rückseite 14.2 ist optisch undurchlässig ausgebildet, das bedeutet, dass zumindest die Rückseite 14.2 des Gehäuses 14 nicht durchscheinen ausgeführt ist. Üblicher Weise ist das Gehäuse 14 der Benutzerschnittstellenvorrichtung 11 aus Metall oder Kunststoff hergestellt.

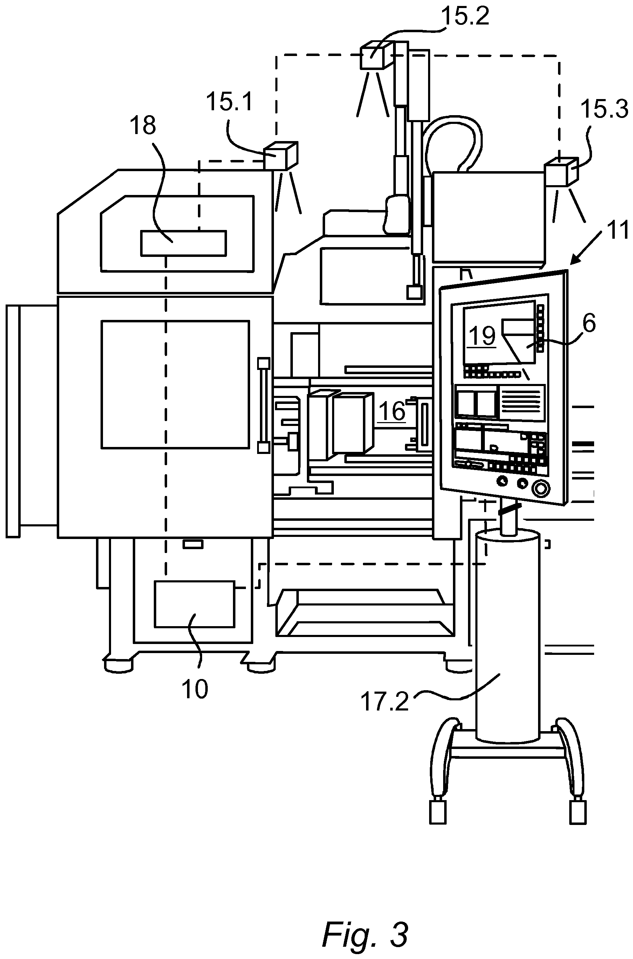

Die Kunststoff-Spritzgießmaschine 1 weist erfindungsgemäß außerdem mindestens eine Kamera 15 auf. Die mindestens eine Kamera 15 ist zur Überwachung einer Umgebung der Kunststoff-Spritzgießmaschine 1 ausgebildet. Unter einer Überwachung einer Umgebung der Kunststoff-Spritzgießmaschine 1 kann verstanden werden, dass die mindestens eine Kamera 15 die Kunststoff-Spritzgießmaschine 1 von außen zumindest teilweise oder vollständig bildlich erfassen kann. Es kann auch vorgesehen sein, dass die mindestens eine Kamera 15 Räume 16 innerhalb der Kunststoff-Spritzgießmaschine 1 bildlich erfassen kann. So kann vorgesehen sein, dass die mindestens eine Kamera 15 den Bereich der Schließeinheit 8 und/oder den Raum zwischen den beiden geöffneten Formhälften 7.1, 7.2 bildlich erfassen kann. Die mindestens eine Kamera 15 kann bspw. aber auch den Bereich der Spritzeinheit 3, wie in Fig.3 angedeutet, bildlich erfassen.

Die Kunststoff-Spritzgießmaschine 1 weist somit eine Spritzeinheit 3 zum Aufbereiten einer zu formenden Kunststoffmasse, eine Schließeinheit 8 mit einem Spritzwerkzeug 7 auf, das wenigstens eine Kavität 9 aufweist, in welche die von der Spritzeinheit 3 aufbereitete Kunststoffmasse eingespritzt wird, um ein Formteil herzustellen. Außerdem weist die Kunststoff-Spritzgießmaschine 1 eine Maschinensteuerung 10 auf, die ausgebildet ist, zumindest die Spritzeinheit 3 und die Schließeinheit 8 anzusteuern. Darüber hinaus weist die Kunststoff-Spritzgießmaschine 1 eine Benutzerschnittstellenvorrichtung 11 auf, die wenigstens ein Eingabemittel 13.1-13.3 aufweist und wenigstens ein Ausgabemittel 12 aufweist, das als ein Bildschirm 12.1 ausgebildet ist. Wenigstens eine Kamera 15 ist zur Überwachung einer Umgebung der Kunststoff-Spritzgießmaschine 1 ausgebildet, wobei die Kamera 15 erfindungsgemäß außerdem ausgebildet ist, einen hinter der Benutzerschnittstellenvorrichtung 11 liegenden Bereich der Umgebung der Kunststoff-Spritzgießmaschine 1 auf dem Bildschirm 12.1 anzuzeigen.

Die Kunststoff-Spritzgießmaschine 1 weist eine Verstellvorrichtung 17 auf, welche die Benutzerschnittstellenvorrichtung 11 trägt und welche ausgebildet ist, die Benutzerschnittstellenvorrichtung 11 in unterschiedlichen Positionen und/oder Lagen im Raum zu halten, wobei die Kamera 15 derart an der Rückseite des Gehäuses 14 der Benutzerschnittstellenvorrichtung 11 befestigt ist, dass auch die Kamera 15 bei einem Verstellen der Verstellvorrichtung 17 die der Benutzerschnittstellenvorrichtung 11 entsprechende Position und/oder Lage im Raum einnimmt.

Im Falle des ersten Ausführungsbeispiels einer Kunststoff-Spritzgießmaschine 1 gemäß Fig. 1 wird die Verstellvorrichtung 17 von einer scharnierartigen Schwenkvorrichtung 17.1 gebildet, welche die Benutzerschnittstellenvorrichtung 11 an der Kunststoff-Spritzgießmaschine 1, insbesondere an einem Teil ihres Maschinengestells 2 um eine vertikale Achse schwenkbar lagert.

Im Falle des zweiten Ausführungsbeispiels einer Kunststoff-Spritzgießmaschine 1 gemäß Fig.3 wird die Verstellvorrichtung 17 von einem Fahrstativ 17.2 gebildet, welches die Benutzerschnittstellenvorrichtung 11 trägt, um die Benutzerschnittstellenvorrichtung 11 auf einem Boden unabhängig von der Kunststoff-Spritzgießmaschine 1 verfahren zu können.

In einem weiteren, nicht dargestellten Ausführungsbeispiel kann die Benutzerschnittstellenvorrichtung 11 aber auch starr an der Kunststoff-Spritzgießmaschine 1, insbesondere an einem Teil ihres Maschinengestells 2 befestigt sein. So kann eine aufwändige Verstellvorrichtung 17 entfallen, da es aufgrund der erfindungsgemäßen Kamera 15 nicht mehr zwingend erforderlich ist, die Benutzerschnittstellenvorrichtung 11 relativ zur Kunststoff-Spritzgießmaschine 1 verstellen zu können, um einen dahinter liegenden Bereich der Kunststoff-Spritzgießmaschine 1 einsehen zu können, da der hinter der Benutzerschnittstellenvorrichtung 11 liegende Bereich der Kunststoff-Spritzgießmaschine 1 bei Bedarf auf dem Bildschirm 12.1 angezeigt werden kann.

In den dargestellten Ausführungsvarianten ist die Kamera 15 an der Rückseite 14.2 des Gehäuses 14 der Benutzerschnittstellenvorrichtung 11 starr befestigt.

Die Kamera 15 oder wenigstens eine weitere Kamera 15.1, 15.2, 15.3 kann aber auch an einer von der Benutzerschnittstellenvorrichtung 11 getrennten Stelle der Kunststoff-Spritzgießmaschine 1 angeordnet sein, insbesondere können mehrere Kameras 15.1, 15.2, 15.3 an verschiedenen von der Benutzerschnittstellenvorrichtung 11 getrennten Stellen der Kunststoff-Spritzgießmaschine 1 angeordnet sein, wie dies in Fig. 3 angedeutet ist.

Die Kameras 15.1, 15.2, 15.3 können in einer solchen Ausführungsform mit einer Auswertevorrichtung 18 verbunden sein, die ausgebildet ist, von den Kameras 15.1, 15.2, 15.3 aufgenommene Bildinformationen zu speichern, die momentane Position und Lage der Benutzerschnittstellenvorrichtung 11 zu erfassen, und die gespeicherten Bildinformationen in Abhängigkeit der erfassten momentanen Position und Lage der Benutzerschnittstellenvorrichtung 11 zu verändern und auf dem Bildschirm 12.1 anzeigen zu lassen, derart, dass in jeder Position und/oder Lage der Benutzerschnittstellenvorrichtung 11 derjenige Bereich der Umgebung der Kunststoff-Spritzgießmaschine 1 auf dem Bildschirm 12.1 angezeigt wird, der in Blickrichtung eines Betrachters auf den Bildschirm 12.1 hinter der Benutzerschnittstellenvorrichtung 11 liegt.

Sowohl die Kameras 15.1, 15.2, 15.3, die Auswertevorrichtung 18, als auch die Benutzerschnittstellenvorrichtung 11 können, wie in Fig.3 angedeutet, jeweils wahlweise drahtgebunden oder drahtlos mit der Maschinensteuerung 10 verbunden sein. Das wenigstens eine Eingabemittel 13.1-13.4 der Benutzerschnittstellenvorrichtung 11 ist eingerichtet, bei seiner manuellen Betätigung eine auf dem Bildschirm 12.1 angezeigte Bedienoberfläche 19 der Maschinensteuerung 10 auszublenden und den hinter der Benutzerschnittstellenvorrichtung 11 liegenden Bereich der Umgebung der Kunststoff-Spritzgießmaschine 1 auf dem Bildschirm 12.1 einzublenden.

Alternativ oder ergänzend kann die Benutzerschnittstellenvorrichtung 11 mit der Maschinensteuerung 10 verbunden sein und das wenigstens eine Eingabemittel 13.1-13.4 bzw. ein anderes Eingabemittel 13.1-13.4 der Benutzerschnittstellenvorrichtung 11 kann eingerichtet sein, bei seiner manuellen Betätigung eine auf dem Bildschirm 12.1 angezeigte Bedienoberfläche 19 der Maschinensteuerung 10 und den hinter der Benutzerschnittstellenvorrichtung 11 liegenden Bereich der Umgebung der Kunststoff-Spritzgießmaschine 1 auf dem Bildschirm 12.1 in einer überlagerten Darstellung simultan anzuzeigen, wie dies in Fig. 3 durch den abschnittsweise auf dem Bildschirm 12.1 dargestellten Aufgabetrichter 6 der Spritzeinheit 3 angedeutet ist.

Insbesondere die Eingabemittel 13.4 können, wie in Fig. 2 dargestellt, jeweils ein Touch-Eingabemittel des Bildschirms 12.1 sein oder der Bildschirm 12.1 kann eine zur Erkennung von Gesten eingerichtete Touch-Oberfläche aufweisen.

### Bezugszeichenliste

- 1: Kunststoff-Spritzgießmaschine
- 2: Maschinengestell
- 3: Spritzeinheit
- 4: Schließeinheit
- 5: Extruder
- 6: Aufgabetrichter
- 7: Spritzwerkzeug
- 7.1: eine Formhälfte
- 7.2: andere Formhälfte
- 8: Schließeinheit
- 8.1: feststehende Formaufspannplatte
- 8.2: bewegliche Formaufspannplatte
- 9: Kavität
- 10: Maschinensteuerung
- 11: Benutzerschnittstellenvorrichtung
- 12: Ausgabemittel
- 12.1: Bildschirm
- 12.2: Bildschirm-Ausgabemittel
- 13.1-13.3: Eingabemittel
- 13.4: Bildschirm-Eingabemittel
- 14: Gehäuse
- 14.1: Vorderseite
- 14.2: Rückseite
- 15: Kamera
- 15.1-15.3: Kameras
- 16: Räume
- 17: Verstellvorrichtung
- 17.1: Schwenkvorrichtung
- 17.2: Fahrstativ
- 18: Auswertevorrichtung
- 19: Bedienoberfläche

## Patentansprüche

1. Kunststoff-Spritzgießmaschine, aufweisend eine Spritzeinheit (3) zum Aufbereiten einer zu formenden Kunststoffmasse, eine Schließeinheit (4) mit einem Spritzwerkzeug (7), das wenigstens eine Kavität (9) aufweist, in welche die von der Spritzeinheit (3) aufbereitete Kunststoffmasse eingespritzt wird, um ein Formteil herzustellen, sowie aufweisend eine Maschinensteuerung (10), die ausgebildet ist, die Spritzeinheit (3) und die Schließeinheit (4) anzusteuern und eine Benutzerschnittstellenvorrichtung (11), die wenigstens ein Eingabemittel (13.1-13.3) aufweist und wenigstens ein Ausgabemittel (12) aufweist, das als ein Bildschirm (12.1) ausgebildet ist, und des Weiteren aufweisend wenigstens eine Kamera (15, 15.1-15.3), die zur Überwachung einer Umgebung der Kunststoff-Spritzgießmaschine (1) ausgebildet ist, wobei die Benutzerschnittstellenvorrichtung (11) ein Gehäuse (14) aufweist, das eine Vorderseite (14.1) und eine Rückseite (14.2) umfasst, wobei an der Vorderseite (14.1) der Bildschirm (12.1) angeordnet ist, und die Maschinensteuerung (10) eingerichtet ist, den von der Kamera (15, 15.1-15.3) erfassten Bereich auf dem Bildschirm (12.1) anzuzeigen, **dadurch gekennzeichnet, dass** die Kunststoff-Spritzgießmaschine (1) eine Verstellvorrichtung (17) aufweist, welche die Benutzerschnittstellenvorrichtung (11) trägt und welche ausgebildet ist, die Benutzerschnittstellenvorrichtung (11) in unterschiedlichen Positionen und/oder Lagen im Raum zu halten, wobei die Kamera (15, 15.1-15.3) ausgebildet ist, einen hinter der Benutzerschnittstellenvorrichtung (11) liegenden Bereich der Kunststoff-Spritzgießmaschine (1) zu erfassen und derart an der Rückseite (14.2) des Gehäuses (14) der Benutzerschnittstellenvorrichtung (11) angeordnet und befestigt ist, dass auch die Kamera (15, 15.1-15.3) bei einem Verstellen der Verstellvorrichtung (17) die der Benutzerschnittstellenvorrichtung (11) entsprechende Position und/oder Lage im Raum einnimmt.

2. Kunststoff-Spritzgießmaschine nach Anspruch 1,
**dadurch gekennzeichnet, dass** die Kamera (15, 15.1-15.3) an der Rückseite (14.2) des Gehäuses (14) der Benutzerschnittstellenvorrichtung (11) starr befestigt ist.

3. Kunststoff-Spritzgießmaschine nach Anspruch 1 oder 2,
**dadurch gekennzeichnet, dass** die Kunststoff-Spritzgießmaschine (1) wenigstens eine ergänzende Kamera (15, 15.1-15.3) aufweist, die an einer von der Benutzerschnittstellenvorrichtung (11) getrennten Stelle der Kunststoff-Spritzgießmaschine (1) angeordnet ist, und die wenigstens eine Kamera (15, 15.1-15.3) mit einer Auswertevorrichtung (18) verbunden ist, die ausgebildet ist, von der Kamera (15, 15.1-15.3) aufgenommene Bildinformationen zu speichern, die momentane Position und Lage der Benutzerschnittstellenvorrichtung (11) zu erfassen, und die gespeicherten Bildinformationen in Abhängigkeit der erfassten momentanen Position und Lage der Benutzerschnittstellenvorrichtung (11) zu verändern und auf dem Bildschirm (12.1) anzeigen zu lassen, derart, dass in jeder Position und/oder Lage der Benutzerschnittstellenvorrichtung (11) derjenige Bereich der Umgebung der Kunststoff-Spritzgießmaschine (1) auf dem Bildschirm (12.1) angezeigt wird, der hinter der Benutzerschnittstellenvorrichtung (11) liegt.

4. Kunststoff-Spritzgießmaschine nach einem der Ansprüche 1 bis 3,
**dadurch gekennzeichnet, dass** die Benutzerschnittstellenvorrichtung (11) mit der Maschinensteuerung (10) verbunden ist und das wenigstens eine Eingabemittel (13.1-13.3) der Benutzerschnittstellenvorrichtung (11) eingerichtet ist, bei seiner manuellen Betätigung eine auf dem Bildschirm (12.1) angezeigte Bedienoberfläche (19) der Maschinensteuerung (10) auszublenden und den hinter der Benutzerschnittstellenvorrichtung (11) liegenden Bereich der Umgebung der Kunststoff-Spritzgießmaschine (1) auf dem Bildschirm (12.1) einzublenden.

5. Kunststoff-Spritzgießmaschine nach einem der Ansprüche 1 bis 3,
**dadurch gekennzeichnet, dass** die Benutzerschnittstellenvorrichtung (11) mit der Maschinensteuerung (10) verbunden ist und das wenigstens eine Eingabemittel (13.1-13.3) der Benutzerschnittstellenvorrichtung (11) eingerichtet ist, bei seiner manuellen Betätigung eine auf dem Bildschirm (12.1) angezeigte Bedienoberfläche (19) der Maschinensteuerung (10) und den hinter der Benutzerschnittstellenvorrichtung (11) liegenden Bereich der Umgebung der Kunststoff-Spritzgießmaschine (1) auf dem Bildschirm (12.1) in einer überlagerten Darstellung simultan anzuzeigen.

6. Kunststoff-Spritzgießmaschine nach Anspruch 4 oder 5,
**dadurch gekennzeichnet, dass** das Eingabemittel (13.1-13.3) ein Touch-Eingabemittel des Bildschirms (12.1) ist oder der Bildschirm (12.1) eine zur Erkennung von Gesten eingerichtete Touch-Oberfläche aufweist.

7. Kunststoff-Spritzgießmaschine nach einem der Ansprüche 1 bis 6,
**dadurch gekennzeichnet, dass** die Benutzerschnittstellenvorrichtung (11) wenigstens ein Touch-Eingabemittel aufweist, das hinsichtlich seiner Position und/oder Lage derart auf dem Bildschirm (12.1) eingerichtet ist, dass es einer mittels der Kamera (15, 15.1-15.3) erfassten und auf dem Bildschirm (12.1) angezeigten Darstellung eines Maschinenteils der Kunststoff-Spritzgießmaschine (1) überlagert ist.

8. Kunststoff-Spritzgießmaschine nach Anspruch 7,
**dadurch gekennzeichnet, dass** die Maschinensteuerung (10) ausgebildet ist, aufgrund einer manuellen Betätigung des Touch-Eingabemittels dasjenige Maschinenteil der Kunststoff-Spritzgießmaschine (1) in einer vorbestimmten Weise anzusteuern, das von dem Touch-Eingabemittel überlagert ist.

## Claims

1. A plastic injection-moulding machine, having an injection unit (3) for processing a plastic mass to be moulded, a closing unit (4) with an injection tool (7), which has at least one cavity (9), into which the plastic mass processed by the injection unit (3) is injected, in order to produce a moulded part, and having a machine control (10), which is configured to control the injection unit (3) and the closing unit (4), and a user interface device (11), which has at least one input means (13.1-13.3) and at least one output means (12), which is configured as a screen (12.1), and furthermore having at least one camera (15, 15.1-15.3), which is configured for monitoring an environment of the plastic injection-moulding machine (1), wherein the user interface device (11) has a housing (14) which comprises a front side (14.1) and a rear side (14.2), wherein on the front side (14.1) the screen (12.1) is arranged, and the machine control (10) is set up to display on the screen (12.1) the region detected by the camera (15, 15.1-15.3), **characterized in that** the plastic injection-moulding machine (1) has an adjusting device (17), which carries the user interface device (11) and which is configured to hold the user interface device (11) in different positions and/or locations in the space, wherein the camera (15, 15.1-15.3) is configured to detect a region of the plastic injection-moulding machine (1) lying behind the user interface device (11) and is arranged and fastened on the rear side (14.2) of the housing (14) of the user interface device (11) in such a way that the camera (15, 15.1-15.3) on an adjusting of the adjusting device (17) also assumes the position and/or location in the space corresponding to the user interface device (11).

2. The plastic injection-moulding machine according to Claim 1,
**characterized in that** the camera (15, 15.1-15.3) is fastened rigidly on the rear side (14.2) of the housing (14) of the user interface device (11).

3. The plastic injection-moulding machine according to Claim 1 or 2,
**characterized in that** the plastic injection-moulding machine (1) has at least one supplementary camera (15, 15.1-15.3), which is arranged at a location of the plastic injection-moulding machine (1) separated from the user interface device (11), and the at least one camera (15, 15.1-15.3) is connected to an evaluating device (18), which is configured to store image information received from the camera (15, 15.1-15.3), to detect the instantaneous position and location of the user interface device (11), and to alter and display on the screen (12.1) the stored image information depending on the detected instantaneous position and location of the user interface device (11), in such a way that in each position and/or location of the user interface device (11) the region of the environment of the plastic injection-moulding machine (1) is displayed on the screen (12.1) which lies behind the user interface device (11).

4. The plastic injection-moulding machine according to one of Claims 1 to 3,
**characterized in that** the user interface device (11) is connected to the machine control (10), and the at least one input means (13.1-13.3) of the user interface device (11) is set up, when it is manually actuated, to fade out an operating surface (19) of the machine control (10) displayed on the screen (12.1) and to fade in on the screen (12.1) the region of the environment of the plastic injection-moulding machine (1) lying behind the user interface device (11).

5. The plastic injection-moulding machine according to one of Claims 1 to 3,
**characterized in that** the user interface device (11) is connected to the machine control (10), and the at least one input means (13.1-13.3) of the user interface device (11) is set up, when it is manually actuated, to display simultaneously in a superimposed presentation on the screen (12.1) an operating surface (19) of the machine control (10) displayed on the screen (12.1) and the region of the environment of the plastic injection-moulding machine (1) lying behind the user interface device (11).

6. The plastic injection-moulding machine according to Claim 4 or 5,
**characterized in that** the input means (13.1-13.3) is a touch input means of the screen (12.1), or the screen (12.1) has a touch surface which is set up for detecting gestures.

7. The plastic injection-moulding machine according to one of Claims 1 to 6,
**characterized in that** the user interface device (11) has at least one touch input means, which with regard to its position and/or location is set up on the screen (12.1) in such a way that it is superimposed to a presentation of the machine part of the plastic injection-moulding machine (1) detected by means of the camera (15, 15.1-15.3) and displayed on the screen (12.1) .

8. The plastic injection-moulding machine according to Claim 7,
**characterized in that** the machine control (10) is configured to control in a predetermined manner the machine part of the plastic injection-moulding machine (1) superimposed by the touch input means, due to a manual actuation of the touch input means.

## Revendications

1. Presse d'injection plastique, présentant une unité d'injection (3) pour fournir une masse de plastique à mouler, une unité de fermeture (4) comprenant un outil d'injection (7) qui présente au moins une cavité (9) dans laquelle la masse de plastique fournie par l'unité d'injection (3) est injectée pour produire une pièce moulée, ainsi que présentant une commande de machine (10) qui est conçue pour commander l'unité d'injection (3) et l'unité de fermeture (4) et un dispositif d'interface utilisateur (11) qui présente au moins un moyen de saisie (13.1-13.3) et au moins un moyen de sortie (12) qui est conçu en tant qu'un écran (12.1), et présentant en outre au moins une caméra (15, 15.1-15.3) qui est conçue pour surveiller un environnement de la presse d'injection plastique (1), dans lequel le dispositif d'interface utilisateur (11) présente un boîtier (14) qui comprend une face avant (14.1) et une face arrière (14.2), dans lequel l'écran (12.1) est disposé sur la face avant (14.1), et la commande de machine (10) est conçue pour afficher sur l'écran (12.1) la zone détectée par la caméra (15, 15.1-15.3), **caractérisée en ce que** la presse d'injection plastique (1) présente un dispositif de réglage (17) qui porte le dispositif d'interface utilisateur (11) et lequel est conçu pour maintenir le dispositif d'interface utilisateur (11) dans différentes positions et/ou situations dans l'espace, dans lequel la caméra (15, 15.1-15.3) est conçue pour détecter une zone de la presse d'injection plastique (1) qui se trouve derrière le dispositif d'interface utilisateur (11) et est ainsi disposée et fixée sur la face arrière (14.2) du boîtier (14) du dispositif d'interface utilisateur (11) que la caméra (15, 15.1-15.3) adopte également la position et/ou situation correspondant au dispositif d'interface utilisateur (11) lors d'un réglage du dispositif de réglage (17).

2. Presse d'injection plastique selon la revendication 1, **caractérisée en ce que** la caméra (15, 15.1-15.3) est fixée de manière rigide sur la face arrière (14.2) du boîtier (14) du dispositif d'interface utilisateur (11) .

3. Presse d'injection plastique selon la revendication 1 ou 2, **caractérisée en ce que** la presse d'injection plastique (1) présente au moins une caméra complémentaire (15, 15.1-15.3) qui est disposée à un endroit de la presse d'injection plastique (1) séparé du dispositif d'interface utilisateur (11), et l' au moins une caméra (15, 15.1-15.3) est reliée à un dispositif d'évaluation (18) qui est conçu pour enregistrer des informations d'image prises par la caméra (15, 15.1-15.3), pour détecter la position et la situation momentanée du dispositif d'interface utilisateur (11), et pour modifier et faire afficher sur l'écran (12.1) les informations d'image enregistrées en fonction de la position et de la situation momentanée détectée du dispositif d'interface utilisateur (11), de telle sorte que dans chaque position et/ou situation du dispositif d'interface utilisateur (11), la zone de l'environnement de la presse d'injection plastique (1) qui se trouve derrière le dispositif d'interface utilisateur (11) est affichée sur l'écran (12.1).

4. Presse d'injection plastique selon l'une des revendications 1 à 3, **caractérisée en ce que** le dispositif d'interface utilisateur (11) est relié à la commande de machine (10) et l'au moins un moyen de saisie (13.1-13.3) du dispositif d'interface utilisateur (11) est conçu, lors de son actionnement manuel, pour masquer une surface utilisateur (19) de la commande de machine (10) affichée sur l'écran (12.1) et pour insérer sur l'écran (12.1) la zone de l'environnement de la presse d'injection plastique (1) qui se trouve derrière le dispositif d'interface utilisateur (11).

5. Presse d'injection plastique selon l'une des revendications 1 à 3, **caractérisée en ce que** le dispositif d'interface utilisateur (11) est relié à la commande de machine (10) et l'au moins un moyen de saisie (13.1-13.3) du dispositif d'interface utilisateur (11) est conçu, lors de son actionnement manuel, pour masquer une surface utilisateur (19) de la commande de machine (10) affichée sur l'écran (12.1) et pour afficher simultanément sur l'écran (12.1) la zone de l'environnement de la presse d'injection plastique (1) qui se trouve derrière le dispositif d'interface utilisateur (11), dans une représentation superposée.

6. Presse d'injection plastique selon la revendication 4 ou 5, **caractérisée en ce que** le moyen de saisie (13.1-13.3) est un moyen de saisie tactile de l'écran (12.1) ou bien l'écran (12.1) présente une surface tactile conçue pour reconnaître des gestes.

7. Presse d'injection plastique selon l'une des revendications 1 à 6, **caractérisée en ce que** le dispositif d'interface utilisateur (11) présente au moins un moyen de saisie tactile qui, par rapport à sa position et/ou situation sur l'écran (12.1) est conçu de façon à ce qu'il est superposé à une représentation d'une partie de machine de la presse d'injection plastique (1) détectée au moyen de la caméra (15, 15.1-15.3) et affichée sur l'écran (12.1).

8. Presse d'injection plastique selon la revendication 7, **caractérisée en ce que** la commande de machine (10) est conçue, du fait d'un actionnement manuel du moyen de saisie tactile, pour commander d'une manière prédéterminée la partie de machine de la presse d'injection plastique (1) qui est superposée par le moyen de saisie tactile.
